(19) Europäisches Patentamt
European Patent Office
Office européen des brevets

(11) EP 1 086 276 B1

(12) **FASCICULE DE BREVET EUROPEEN**

(45) Date de publication et mention de la délivrance du brevet:
**08.09.2004 Bulletin 2004/37**

(21) Numéro de dépôt: **99923646.6**

(22) Date de dépôt: **01.06.1999**

(51) Int Cl.[7]: **D21H 23/76**, D21H 23/14, D21H 21/10
// (D21H17/37, 17:68)

(86) Numéro de dépôt international:
**PCT/FR1999/001277**

(87) Numéro de publication internationale:
**WO 1999/066130 (23.12.1999 Gazette 1999/51)**

(54) **PROCEDE DE FABRICATION DE PAPIER ET CARTON**

VERFAHREN ZUR HERSTELLUNG VON PAPIER UND PAPPE

METHOD FOR MANUFACTURING PAPER AND CARDBOARD

(84) Etats contractants désignés:
**AT DE FI FR GB IT SE**

(30) Priorité: **12.06.1998 FR 9807545**

(43) Date de publication de la demande:
**28.03.2001 Bulletin 2001/13**

(73) Titulaire: **SNF, S.A.**
**42028 Saint-Etienne Cedex 01 (FR)**

(72) Inventeurs:
- **HUND, René**
  **F-42390 Villars (FR)**
- **JEHN-RENDU, Christian**
  **42028 Saint Etienne Cedex 01 (FR)**

(74) Mandataire: **Richebourg, Michel François**
**Cabinet Michel Richebourg,**
**"Le Clos du Golf",**
**69, rue Saint-Simon**
**42000 Saint Etienne (FR)**

(56) Documents cités:

| | |
|---|---|
| **EP-A- 0 188 721** | **EP-A- 0 201 237** |
| **EP-A- 0 202 780** | **EP-A- 0 374 458** |
| **EP-A- 0 574 335** | **WO-A-97/16598** |
| **FR-A- 2 589 145** | **US-A- 5 514 249** |

Remarques:
Le dossier contient des informations techniques présentées postérieurement au dépôt de la demande et ne figurant pas dans le présent fascicule.

EP 1 086 276 B1

Il est rappelé que: Dans un délai de neuf mois à compter de la date de publication de la mention de la délivrance du brevet européen, toute personne peut faire opposition au brevet européen délivré, auprès de l’Office européen des brevets. L’opposition doit être formée par écrit et motivée. Elle n’est réputée formée qu’après paiement de la taxe d’opposition. (Art. 99(1) Convention sur le brevet européen).

Printed by Jouve, 75001 PARIS (FR)

## Description

La présente invention concerne le secteur technique de la fabrication du papier et des polymères utilisés dans ce cadre.

L'invention concerne un procédé pour la fabrication d'un papier ou d'un carton a rétention améliorée.

Lors de la fabrication du papier, du carton ou analogue, il est bien connu d'introduire dans la pâte des agents de rétention dont la fonction est de retenir un maximum de fines et de charges dans la feuille. Les effets bénéfiques qui découlent de l'utilisation d'un agent de rétention sont essentiellement :

- l'augmentation de la production et la diminution des coûts de fabrication : économie énergétique, marche plus régulière de la machine, rendement plus élevé en fibres, fines, charges et de produits d'ennoblissement anioniques, plus faible acidité dans le circuit liée a une diminution de l'utilisation de sulfate d'alumine et donc amoindrissement des problèmes de corrosion ;

- l'amélioration de la qualité : meilleure formation et meilleur épair ; amélioration du taux d'humidité de la feuille, de l'opacité, du lisse, du pouvoir absorbant et diminution de la porosité du papier.

Depuis longtemps, on a proposé d'ajouter à la pâte de la bentonite, celle-ci pouvant être éventuellement additionnée à d'autres produits minéraux, tels que des sulfates d'aluminium, voire des polymères synthétiques, notamment du polyéthyléne-imine (voir par exemple documents DE-A-2 262 906 et US-A-2 368 635).

Dans le document US-A-3 052 595, on a proposé d'associer de la bentonite à un polyacrylamide de caractéristique linéaire essentielle. Ce procédé s'est trouvé en concurrence avec des systèmes plus faciles à mettre en oeuvre tout en étant aussi performants. En outre, même avec les polyacrylamides linéaires actuels, le pouvoir de rétention reste encore insuffisant.

Dans le document EP-A-0 017 353, on a proposé, pour la rétention des pâtes peu chargées (au plus 5 % de charges) d'associer à la bentonite un copolyacrylamide linéaire non ionique ou faiblement anionique. Ce procédé ne s'est guère développé, car ces polymères sont relativement peu performants en matière de rétention, notamment de pâtes chargées, sans doute par suite d'une synergie insuffisante entre ces copolymères et la bentonite qui a peu tendance a recoaguler.

On connaît également dans l'art antérieur des systèmes d'agents de rétention pour la fabrication d'une feuille de papier, carton ou analogue, qui consistent en une combinaison de deux agents de rétention, généralement un agent de rétention principal et un agent de rétention secondaire. Il s'agit alors d'un système qualifié de « dual ».

Dans le brevet US-A-4,753,710, on préconise ainsi l'emploi d'un polymère acrylique linéaire de haut poids moléculaire comme agent de rétention principal, qui est ajouté à la masse fibreuse, puis un cisaillement notamment dans la pompe de mélange ou «fan pump», puis un ajout de bentonite (qui est une argile gonflante) comme agent de rétention secondaire. Ce document ne suggère et ne décrit aucun cisaillement du polymère lui-même avant l'introduction dans la suspension à floculer.

On connaît encore dans l'art antérieur des agents de rétention réticulés tels que décrits par exemple dans le brevet EP 0 202 780, pour le traitement des eaux, essentiellement, et secondairement le papier. Il convient de noter qu'il emploie un produit réticulé, qui est ajouté à la suspension à floculer, les flocs étant ensuite cisaillés dans le processus de fabrication du papier, c'est-à-dire cisaillés dans et en même temps que la pâte à papier. Les flocs sont ainsi transformés en flocs plus petits et résistant au cisaillement, donc plus robustes. Ce document ne suggère et ne décrit aucun cisaillement du polymère lui-même avant l'introduction dans la suspension à floculer.

Selon les techniques antérieures relatives aux applications papier, on forme ainsi, entre l'agent de floculation et la masse fibreuse de pâte, des flocs d'une assez grande dimension, qui sont ensuite cisaillés afin de former des flocs dont on indique dans les documents cités qu'ils sont plus petits et plus robustes.

Dans le document EP-A-0 235 893, on a proposé de faire appel a des polyacrylamides cationiques de poids moléculaire supérieur à un million, de trente millions et plus, essentiellement linéaires. On obtient de la sorte un effet de rétention certes satisfaisant, mais encore jugé insuffisant dans l'application papetière, car l'utilisation de bentonite entraînant des difficultés lors de traitement d'eau, les utilisateurs ne sélectionnent ce système qu'en cas d'avantages significatifs.

Le brevet US-A-4,753,710 (produit «HYDROCOL» (™) (™) commercial) déjà cité ci-dessus décrit également l'addition d'un polymère cationique comme agent principal de rétention, puis une étape de fort cisaillement, puis une addition de bentonite comme agent secondaire de rétention. Ses inconvénients sont l'obligation d'optimiser le point d'introduction, ce qui ne représente pas de difficulté particulière compte-tenu de l'ensemble de recherches antérieures sur ce sujet, mais représente une contrainte pour l'usager de l'industrie papetière, ainsi qu'un risque de surdosage du polymère, nécessaire pour pallier la dégradation incontrôlée ou trop importante des flocs par le cisaillement imposé.

Dans les notes présentées a l'occasion du cours à Seattle, 11-13 octobre 1989, publiées sous le titre "Supercoagulation in the control of wet end chemistry by synthetic polymer and activated bentonite", R. Kajasvirta a décrit le mécanisme de la supercoagulation de la bentonite activée en présence d'un copolyacrylamide cationique, sans en préciser la nature exacte. Ce procédé présente les mêmes inconvénients que ceux indiqués précédemment.

Le brevet européen EP 0 201 237 décrit un procédé de floculation dans lequel un matériau polymère est ajouté à de l'eau pour former une composition aqueuse, et est utilisé pour floculer les matières solides en suspension dans une suspension aqueuse, ledit polymère consistant en un polymère de haut poids moléculaire, que l'on soumet à un cisaillement, ce cisaillement étant effectué avant ou pendant la floculation et le polymère devant répondre à certaines propriétés intrinsèques qui sont indiquées dans ce brevet.

Selon ce document, le polymère est un polymère de haut poids moléculaire, formé à partir de monomères solubles dans l'eau ou d'un mélange de tels monomères, et l'on soumet le polymère au cisaillement. Le procédé décrit dans ce brevet est caractérisé en ce que l'on peut effectuer le cisaillement avant ou durant la floculation. Le brevet EP 0 201 237 indique encore que le polymère utilisé comprend un polymère réticulé gonflable à l'eau qu'il est possible de cisailler jusqu'à une viscosité intrinsèque d'au moins 4 dl/g. Il est également indiqué que la composition aqueuse contenant le matériau polymère peut être une composition stable et homogène, le cisaillement provoquant alors une augmentation de la viscosité intrinsèque d'au moins 1 dl/g.

Par « stable et homogène », ce document désigne une composition de polymère qui est stable lorsque le polymère se trouve en équilibre complet avec l'eau, c'est-à-dire qu'il a atteint son degré ultime de mise en solution ou de gonflement. La composition est par ailleurs homogène en ce sens que le polymère reste uniformément dispersé dans toute la composition, sans avoir tendance à précipiter au terme de quelques jours.

Ce document décrit en particulier de nombreuses applications pour le traitement de l'eau, qui est manifestement l'application tout à fait principale qui est visée, et le traitement du minerai de charbon.

Ce brevet mentionne également, très brièvement et sans donner d'exemple de réalisation, ni même d'indications précises de mise en pratique, une application à la fabrication du papier ou d'un carton; il est seulement indiqué que le polymère peut être ajouté à un stade précoce de la ligne de circulation de pâte (masse fibreuse) avec un cisaillement le long de la ligne d'écoulement de la suspension, vers l'étape de drainage ou une autre étape d'élimination de l'eau. Le brevet indique que le cisaillement est effectué par le pompage, donc par la « fan pump » ou pompe de mélange située effectivement en ligne sur les machines à papier.

Pour les autres applications, et notamment le traitement des eaux, le document indique également que l'on peut effectuer le cisaillement sur la ligne de production, lorsque la suspension à floculer approche d'une centrifugeuse, un filtre presse, ou une presse à bande, ou une autre étape d'élimination de l'eau. Il est encore noté que le cisaillement peut être appliqué durant une étape d'élimination de l'eau qui est conduite sous un certain cisaillement, de préférence dans une centrifugeuse ou encore dans un filtre presse ou dans une presse à bande.

Ce document n'enseigne donc qu'un cisaillement des flocs dans la pompe de mélange ou « fan pump » pour l'application papier. Il enseigne par ailleurs que des taux de cisaillement très faibles peuvent convenir dans les autres applications, puisque les filtre presse et les presses à bande induisent un très faible cisaillement.

L'invention pallie les inconvénients rappelés ci-dessus.

Elle vise un procédé perfectionné du type en question, qui incorpore des opérations qui consistent à ajouter à la suspension ou masse fibreuse à floculer, ou pâte à papier,

a) un (co)polyacrylamide, comme agent de rétention principal, qui est réticulé et est préparé sous la forme d'une émulsion inverse ou eau-dans-huile, cette émulsion inverse (et « inversée » à l'eau) ou bien la poudre séchée obtenue à partir de cette émulsion inverse et redissoute dans de l'eau, étant elle même cisaillée préalablement à l'introduction ou injection dans la masse fibreuse tel qu'on effectue le cisaillement de l'émulsion inverse de polymère (solution « inversée » à l'eau) ou de la solution obtenue par redissolution dans l'eau de la poudre obtenue par séchage de l'émulsion inverse de synthèse, avant l'injection dans la pâte, à une concentration du l'ordre de 3 -5 à 10 - 15 g de matière active ( cad le polymère) / titre d'émulsion du polymère, de préférence entre 5 et 10 g/l à 10.000 tours/minute ou dans un mixer ou mélangeur ménager, sensiblement au même ordre de grandeur de vitesse de rotation, durant une durée comprise entre 15 - 30 secondes et 2 - 5 minutes, et on obtient par le cisaillement de l'émulsion inverse « Inversée » à l'eau ou de la solution de la poudre de séchage de l'émulsion de synthèse, avant l'injection dans la pâte, un regain ionique IR de 40 à 50 % ou pouvant atteindre au moins 60 ou 70 % et même plus, jusqu'à des valeurs supérieures ou très supérieures à 100 %; avec:

$$\text{Regain Ionique IR} = (X-Y)/Y \times 100$$

avec

X : tonicité après cisaillement en meq/g,

Y : tonicité avant cisaillement en meq/g.

et

b) un second agent de rétention (système dit « dual », de type « microparticulaire »),

c) sans étape de fort cisaillement de la pâte entre les ajouts a) et b), ou bien avec un cisaillement « facultatif » (tel que défini ci-dessous) de la pâte entre les deux ajouts a) et b).

Le second agent de rétention est la bentonite, et on se référera dans ce domaine à l'enseignement du brevet US-A-4,753,710 précité, que l'on pourra remplacer avantageusement par un kaolin, de préférence prétraité par un polyélectrolyte, selon l'enseignement du brevet FR 95 13 051 déposé au nom du Demandeur;

et l'homme de métier pourra utilement s'y reporter pour les détails de mise en oeuvre, les additifs usuels, etc.

L'addition du polymère et celle de la bentonite ne sont séparées selon l'invention par aucune étape obligatoire de cisaillement important de la pâte, comme par exemple au niveau de la pompe de mélange dite « fan pump », contrairement à l'enseignement du brevet US-A-4, 753, 710 et contrairement à un très vaste art antérieur traitant du point d'addition de l'agent de rétention par rapport aux étapes de cisaillement existant sur la machine, notamment US-A-3,052,595, Unbehend, TAPPI Vol. 59, N° 10, octobre 1976, Luner, 1984 papermakers Conference ou Tappi, avril 1984, pp 95-99, Sharpe, Merck and Co Inc, Rahway, NJ, USA, autour de 1980, Chapter 5 « polyelectrolyte retention aids », Britt, Tappi Vol. 56, octobre 1973, p 46 ff. et Waech, Tappi, mars 1983, pp 137, et le US-A-4,388,150 (Eka Nobel). Selon l'invention, il est même tout à fait préféré qu'il n'existe pas de cisaillement intercalaire de la pâte entre les deux ajouts.

Ce procédé selon l'invention permet d'obtenir une rétention nettement améliorée de fines et de charges et ce sans effet inversé. On améliore également, ce qui est une caractéristique supplémentaire de ce perfectionnement, les propriétés d'égouttage, ce qui est inattendu compte tenu de l'amélioration de la rétention, et on maintient une excellente formation, ce qui est également surprenant.

Le polyacrylamide réticulé (ou plus généralement le (co)polymère réticulé) est introduit dans la suspension ou pâte à floculer sous la forme de l'émulsion inverse eau-dans-huile issue de la synthèse, et elle même « inversée » à l'eau, ou bien sous la forme d'une solution dans l'eau, à environ 5 g de polymère / litre, de la poudre obtenue par le séchage de l'émulsion inverse eau-dans-huile de la synthèse, ladite émulsion ou bien ladite solution étant cisaillée avant l'introduction dans la pâte ou suspension à floculer, le dosage pour l'introduction étant établi à raison de 0,03 à un pour mille (0,03 a 1 %o, soit 30 à 1000 g/t) en poids de matière active (polymère) par rapport au poids sec de la suspension fibreuse, de préférence de 0,15 à 0,5 pour mille, soit 150 à 500 g/t.

De manière connue de l'homme de métier, lorsque l'on utilise directement l'émulsion issue de la synthèse du polymère, cette émulsion eau-dans-huile de polymère est diluée à l'eau pour obtenir une teneur en polymère de l'ordre de 5 à 10 g/l, de préférence voisine de 5 g/l, et est ainsi « inversée par cette dilution pour former une solution, laquelle est cisaillée selon l'invention avant son introduction dans la pâte.

On préférera selon l'invention utiliser l'émulsion « inversée » cisaillée, mais l'exemple 3 ci dessous montre que les résultats de la solution cisaillée de la poudre obtenue par séchage de l'émulsion sont équivalents.

Selon les techniques antérieures relatives aux applications papier, on forme, entre l'agent de floculation ou de rétention et la masse fibreuse de pâte, des flocs d'une assez grande dimension, qui sont ensuite cisaillés afin de former des flocs dont on indique dans les documents cités qu'ils sont plus petits et plus robustes.

De plus, les systèmes de l'art antérieur du type système dual imposent l'emploi d'un cisaillement fort entre l'ajout du polymère cationique et l'ajout du second agent de rétention, la bentonite ou un kaolin. De tels systèmes peuvent être qualifiés de « microparticulaires ».

Les systèmes « dual » de l'art antérieur étaient composés essentiellement de polymères linéaires avec adjonction de bentonite, ou d'un polyacrylamide ramifié ou d'amidon, avec adjonction de silice colloïdale, ce dernier composant étant extrêmement onéreux.

On connaît une amélioration à ces procédés, décrite dans le brevet FR 95 13 051 au nom du Demandeur, qui concerne un système dual à base d'un polymère de type polyacrylamide linéaire ou ramifié et de kaolin, le kaolin étant une argile non gonflante qui ne présente pas les inconvénients de la bentonite, le kaolin étant prétraité dans un mode préféré de réalisation.

Au contraire, selon la présente invention, on utilise un agent de rétention principal qui est réticulé et qui est cisaillé avant son introduction dans la pâte, de préférence en émulsion inverse eau-dans-huile, et qui conduit directement à des microflocs sans passer par le cisaillement de flocs plus importants et impliquant la masse fibreuse.

Selon l'invention, et sans vouloir être limité par une quelconque théorie, le Demandeur considère en effet qu'il se produit, à la suite du fort cisaillement effectué sur le polymère lui-même avant son injection dans la masse fibreuse de pâte, directement une microfloculation, ce qui est donc un processus différent (et inattendu) de la réduction de taille de flocs importants (et impliquant la masse fibreuse) en flocs plus petits et plus robustes, et qui conduit à des améliorations non prévues des propriétés de la feuille de papier ou carton.

Cette sélection de la forme réticulée, en émulsion inverse cisaillée ( ou en solution de la poudre de séchage de l'émulsion) avant introduction dans la masse fibreuse, en combinaison avec l'ajout ultérieur d'un second agent de rétention, mais sans cisaillement intercalaire de la pâte, permet, dans l'application papetière pour la rétention de charges et de fines, d'atteindre un niveau de performances inégalé jusqu'alors.

Les monomères utilisés pour la préparation du (co)polymère peuvent être non ioniques, mais généralement au moins une partie des monomères utilisés pour former le polymère est ionique. Les monomères sont habituellement des monomères à insaturation monoéthylénique, quelquefois des monomères allyliques, mais généralement des monomères vinyliques. Ce sont généralement des monomères acryliques ou méthacryliques.

Des monomères non ioniques convenables sont l'acrylamide, le methacrylamide, le N-vinylméthylacétamide ou le formamide, l'acétate de vinyle, la vinylpyrrolidone, le methacrylate de méthyle ou d'autres esters acryliques, ou d'autres esters à insaturation éthylénique, ou encore d'autres monomères vinyliques insolubles dans l'eau comme le styrène ou l'acrylonitrile.

Des monomères anioniques convenables sont par exemple l'acrylate de sodium, le methacrylate de sodium, l'itaconate de sodium, le 2-acrylamido 2-méthylpropane sulfonate (AMPS), les sulfopropylacrylates ou les sulfopropylmethacrylates, ou d'autres formes solubles dans l'eau de ces acides sulfoniques ou carboxyliques polymérisables. On pourra utiliser un vinylsulfonate de sodium, ou un allylsulfonate, ou un acrylamide sulfométhylé.

Des monomères cationiques convenables sont les acrylates et methacrylates de dialkylaminoalkyle, en particulier l'acrylate de dialkylaminoéthyle, ainsi que leurs sels d'acides ou leurs produits quaternaires, et encore les dialkylaminoalkylalkylacrylamides ou - methacrylamides, ainsi que leurs sels acides et les produits de quatemisation, par exemple le methacrylamido-propyl triméthyl ammonium chlorure et les produits de Mannich comme les dialkylaminométhylacrylamides quaternisés. Les groupes alkyle dont il est question sont généralement des groupes alkyle en $C_1$-$C_4$.

Les monomères peuvent contenir des groupes hydrophobes, comme par exemple décrits dans le brevet EP 0 172 723, et on pourra préférer dans certains cas des monomères d'éther allylique.

On utilisera ici par simplicité le terme « (co)polyacrylamide » pour désigner l'ensemble des combinaisons de ces monomères, qui sont bien connus de l'homme de métier.

Avantageusement, en pratique, le (co)polyacrylamide réticulé est un copolymère cationique d'acrylamide et d'un monomère éthylénique cationique non saturé, choisi dans le groupe comprenant l'acrylate de dimethylaminoethyl (ADAME), le methacrylate de dimethylaminoethyle (MADAME), quatemisés ou salifiés par différents acides et agents quaternisants, benzyle chlorure, méthyle chlorure, alkyl- ou aryle chlorure, diméthyle sulfate, le chlorure de dimethyldiallylammonium (DADMAC), le chlorure d'acrylamidopropyltrimethylammonium (APTAC), et le chlorure de methacrylamidopropyltrimethylammonium (MAPTAC).

L'homme de métier connaît parfaitement les procédés de synthèse d'un (co)polymère en émulsion inverse. On se référera dans ce domaine aux brevets précités.

De manière également connue, ce (co)polymère est réticulé par un agent de réticulation constitué par un composé présentant au moins deux groupèments réactifs choisis dans le groupe comprenant les doubles liaisons, les liaisons aldéhydes ou les liaisons époxy. Ces composés sont bien connus et sont décrits par exemple dans le document EP-A-0 374 458 (voir aussi le document FR-A-2 589 145 du Demandeur).

Comme on le sait, un polymère réticulé est un polymère qui présente sur la chaîne des branches, des groupements ou des ramifications disposés globalement tridimensionnellement pour conduire à des produits pratiquement insolubles et de poids moléculaire infini ; de tels polymères réticulés, à haut poids moléculaire, sont bien connus comme agents floculants comme décrit par exemple dans le brevet EP 0 202 780 ou le EP 0 201 237 d'enseignement équivalent.

On pourra effectuer la réticulation durant ou après la polymérisation, par exemple par réaction de deux polymères solubles présentant des contre ions, ou par réaction sur du formaldéhyde ou un composé de métal polyvalent. Souvent, la réticulation s'effectue durant la polymérisation par addition d'un agent réticulant, et cette solution sera nettement préférée selon l'invention. Ces procédés de polymérisation avec réticulation sont connus.

Les agents de réticulation que l'on peut incorporer comprennent des agents de réticulation ioniques comme les sels de métal polyvalent, le formaldéhyde, le glyoxal, ou encore, et de préférence, des agents de réticulation covalents qui vont copolymériser avec les monomères, de préférence des monomères à insaturation diéthylénique (comme la famille des esters de diacrylates comme les diacrylates de polyéthylène glycols. PEG) ou polyéthylénique, du type que l'on utilise classiquement pour la réticulation des polymères solubles dans l'eau, et notamment le méthylènebisacrylamide (MBA) ou encore un quelconque des autres agents de réticulation acryliques connus.

En pratique, l'agent de réticulation est le méthylène bis acrylamide (MBA), introduit a raison de cinq à deux cents (5 à 200) moles par million de moles de monomères, de préférence de 5 à 100, de préférence 5 à 50, de préférence 10 ou 20.

Avantageusement, la quantité de polyacrylamide réticulé introduite est comprise entre 0,03 pour mille et un pour mille (0,03 %o et 1 %o) soit entre trente et mille grammes de polymère actif / tonne de pâte sèche (30 et 1000 g/t), de préférence entre 0,5 et 0,5 pour mille (%o) de la quantité de la pâte sèche soit de 150 à 500 g / t ; on a observé que si la quantité est inférieure à 0,03 %o, on n'obtient aucune rétention significative ; de même, si cette quantité excède 1 %o, on n'observe aucune amélioration proportionnelle; toutefois, contrairement aux polyacrylamides cationiques linéaires, tels que décrits dans les documents EP-A-0 017 353 et EP 0 235 893 visés dans le préambule, on n'observe pas d'effet inverse de dispersion par recirculation dans les circuits fermés de l'excès de polymère non retenu sur la feuille.

Comme déjà dit, il importe que le polymère réticulé (« cross-linked ») soit préparé sous forme d'émulsion inverse pour réaliser le perfectionnement de l'invention.

Cette approche était condamnée dans le brevet 574 335 précité, où l'on indiquait que si l'on fait appel à un polymère ramifié en émulsion, la présence indispensable dans ces émulsions d'agents tensio-actifs favorise la formation de mousses lors de la fabrication du papier et l'apparition de disparités des propriétés physiques du papier fini (modification de l'absorbance aux endroits où une partie de la phase huile de émulsion est retenue sur la feuille).

Il n'était donc pas évident de considérer pour une application papetière les émulsions inverses eau-dans-huile dont la teneur en huile est évidemment élevée.

Dans une demande de brevet français non publiée à la date de dépôt de la présente demande, il est par ailleurs précisé qu'il est important de rester dans le domaine des polymères ramifiés et de ne pas passer dans le domaine des polymères réticulés, et l'on indique également que les émulsions réticulées ne sont pas connues pour procurer un avantage particulier dans le papier.

Dans une autre demande de brevet français non publiée à la date de dépôt de la présente demande, on utilise par contre un polymère réticulé en émulsion inverse ou en solution, cisaillée avant l'introduction, mais comme agent unique de rétention.

La bentonite, dénommée également "argile smectique gonflante", de la famille des montmorillonites, est bien connue et il n'y a pas lieu de la décrire ici en détail ; ces composés, formés de microcristallites, comportent en surface des sites présentant une forte capacité d'échange cationique susceptible de retenir l'eau (voir par exemple document US-A-4 305 781, qui correspond au document EP-A-0 017 353, mentionné ci-dessus, et FR-A-2 283 102). On a utilisé pour les exemples ci-dessous une bentonite commerciale CPB1 de densité de 900 kg/m3, de capacité de gonflement 40 ml/g, de capacité d'échange de cations de 85 meq/100g à l'état sec, et de dimension moyenne < 75 microns. L'emploi de cette bentonite n'est pas limitatif. Comme indiqué plus haut, on peut également employer un kaolin comme agent secondaire de rétention.

On utilise de préférence une bentonite semi-sodique, que l'on introduit juste en amont de la caisse de tête, à raison de 0,1 a 0,5 pour cent (0,1 a 0,5 %) du poids sec de la suspension fibreuse.

Comme charge (« filler »), on pourra utiliser les kaolins, le GCC ou CaCO3 broyé, le CaCO3 précipité ou PCC, et analogues.

Selon la présente invention, on utilise donc un agent de rétention réticulé, préparé sous forme d'une émulsion inverse, et utilisé soit directement sous la forme de l'émulsion de synthèse (« inversée » comme décrit ci-dessus), soit de la solution de la poudre obtenue par séchage de ladite émulsion, l'émulsion ou la solution étant cisaillée avant son injection ou introduction dans la pâte à floculer, et qui conduit directement à des microflocs sans passer par le cisaillement de flocs plus importants et impliquant la masse fibreuse.

Sans vouloir être limité par une quelconque théorie, le Demandeur considère en effet qu'il se produit, lors du fort cisaillement effectué sur le polymère lui-même avant son injection dans la masse fibreuse de pâte, directement une microfloculation, ce qui est donc un processus différent de la réduction de taille de flocs importants (et impliquant la masse fibreuse) en flocs plus petits et plus robustes, et qui conduit à des améliorations non prévues des propriétés de la feuille de papier ou carton.

On notera que, contrairement à l'enseignement du brevet US-A-4,753,710 («HYDROCOL» (™)) un cisaillement dans les conditions de ligne (cad un cisaillement de la pâte) décrites dans ce document ne conduit absolument pas aux résultats de l'invention.

Par exemple, un cisaillement de la pâte dans une pompe du type « fan pump » ou pompe centrifuge ne donne pas le résultat escompté.

Dans ce domaine, on se référera aux exemples ci-dessous.

Au contraire, il a été découvert selon l'invention que, pour l'application concernant la fabrication d'une feuille de papier ou de carton ou analogue, il était essentiel d'effectuer un fort cisaillement avant l'injection du polymère réticulé dans la pâte à papier ou masse fibreuse devant être floculée, et pas de cisaillement intercalaire de la pâte entre l'injection du polymère (agent de rétention principal) et l'injection de la bentonite ou du kaolin (agent de rétention secondaire du système dual).

L'homme de métier comprendra, à l'examen des deux séries d'exemples A et B ci dessous, que le procédé selon l'invention permet au papetier de s'affranchir totalement de la contrainte du cisaillement « intercalaire » de la pâte (cad du cisaillement de la pâte entre l'ajout du premier et du second agent de rétention). Un tel cisaillement intercalaire est obligatoire dans, par exemple, le système «HYDROCOL» (TM), si l'on veut obtenir un compromis entre les diverses propriétés du papier, notamment rétention, égouttage et formation dont on sait que certaines étaient antagonistes dans l'art antérieur. Cependant, ces mêmes exemples montrent que, si un cisaillement intercalaire intervient dans les essais effectués sur un produit cisaillé avant son introduction dans la pâte, les propriétés du papier ne sont pas notablement dégradées. L'invention concerne donc principalement un procédé sans cisaillement intercalaire de la pâte, mais aussi un procédé comportant un tel cisaillement intercalaire, qu'il soit délibéré ou imposé par les contraintes des équipements existants. Les propriétés obtenues seront meilleures sans ce cisaillement intercalaire, mais si le point d'injection du polymère cisaillé ne peut pas être choisi librement par le papetier en raison de l'équipement existant, le papetier pourra bénéficier de l'excellent ensemble de propriétés apporté par l'invention sans avoir à modifier sa machine. On trouvera ci-dessous des exemples comparatifs A/B montrant que, si l'on effectue le cisaillement de la masse fibreuse (cad après l'addition du polymère cisaillé) dans une application papier, on obtient des résultats qui sont encore tout à fait acceptables. On traduira cet ensemble de possibilités et de constatations, dans ce document, par cisaillement « facultatif ».

Selon une variante de l'invention, et comme indiqué ci-dessus, on pourra utiliser une émulsion inverse du polymère (« inversée » à l'eau) ou bien la poudre obtenue à partir de l'émulsion par une technique de séchage connue, comme par exemple par séchage par pulvérisation ou « spray-drying », précipitation au solvant ou agglomération (PEG) et broyage ( cf. à ce sujet l'art antérieur tel que US-A-5,696,228, WO 97 / 48 755 (USSN 08/668,288), WO 97 / 48 750, WO 97 / 48 732, WO 97 / 34 945, WO 96 / 10589, USP 5,346,986, 5,684,107, EP 0 412 388, EP 0 238 050, USP 4,873,299, EP 0 742 231, WO 90 / 08789 ou EP 0 224 923) que l'on redissout dans l'eau, cisaille puis met en oeuvre comme une émulsion.

Cette variante de la solution est très intéressante car le produit séché se comporte sensiblement, selon l'invention, comme l'émulsion, et cette variante procure donc une solution pour utiliser des produits secs ayant les avantages d'une émulsion, qu'il n'est pas toujours possible de préparer par polymérisation directe en phase aqueuse en gel ou en solution.

Selon l'invention, on utilisera cependant de préférence l'émulsion inverse (inversée à l'eau en une solution à 5 - 10 g/l) du polymère réticulé, avec bien entendu cisaillement préalable à l'injection dans la pâte.

Sans vouloir être limitée par une quelconque théorie, le Demandeur considère que cela est dû au fait qu'on ne libère pas la charge cationique.

Selon l'invention, on pourra effectuer des essais de cisaillement en laboratoire, à une concentration de l'ordre de 3 - 5 à 10 - 15 g de matière active ( cad le polymère) / litre d'émulsion du polymère, de préférence entre 5 et 10 g/l, dans un matériel dénommé « Ultra Turrax » (TM), par exemple à 10.000 tours/minute ou dans un mixer ménager du type « Moulinex » (TM), sensiblement au même ordre de grandeur de vitesse de rotation, durant une durée comprise entre 15 - 30 secondes et 2 - 5 minutes.

Dans l'industrie, il existe des matériels qui conviennent à la mise en oeuvre de l'invention, par exemple des pompes haute pression en recirculation
ou des turbines, qui ne sont pas concernés par l'exemple théorique du document EP 0 201 237.

L'homme de métier saura naturellement envisager tous les équipements possibles permettant d'effectuer un fort cisaillement de l'émulsion de polymère, diluée à une valeur appropriée comme il sera décrit ci-dessous, sans être limité aux exemples ci-dessus.

Pour les généralités de la fabrication d'une pâte à papier ou carton et analogues, ainsi que la liste des additifs, charges, etc. qui sont bien connus, l'homme de métier pourra se référer utilement au USP 4,753,710

Selon l'invention, on obtient, par une optimisation à la portée de l'homme de métier, un regain ionique (IR tel que défini dans le brevet EP 0 201 237) de 40 à 50 ou pouvant atteindre au moins 60 ou 70 % et même plus, jusqu'à des valeurs supérieures ou très supérieures à 100.

On peut de plus ajuster le cisaillement de manière à favoriser, pour la première fois dans cette industrie, une propriété du papier par rapport à une autre, par exemple favoriser un peu plus la rétention que la formation et l'égouttage, ou l'inverse, ou les différentes combinaisons possibles, comme cela sera visible à la lecture des exemples qui vont suivre.

Un dosage normal de l'agent selon l'invention sera tel qu'il conduise à environ 100 à 500 g de matière active (polymère) par tonne de matière fibreuse à traiter.

Selon l'invention, on peut utiliser un polymère présentant une viscosité intrinsèque i.v. aussi faible que 1 à 3, qui devient une viscosité intrinsèque aussi élevée que 3 -7 ou 8 après l'application du cisaillement avant l'injection.

De plus, le système mis en oeuvre selon l'invention n'est pas onéreux, et il combine par conséquent l'ensemble des avantages des systèmes de produits linéaires
ou réticulés uniques à cisaillement de flocs et des systèmes « dual » à deux agents de rétention et également à cisaillement de flocs.

L'injection ou introduction du polymère réticulé en émulsion inverse (ou en solution de la poudre redissoute) cisaillée selon l'invention est effectuée dans la pâte à papier (ou masse fibreuse à floculer) plus ou moins diluée selon la pratique de l'homme du métier, et généralement dans la pâte à papier diluée ou « thin stock », cad une pâte diluée à environ 1,5 % de matières solides telles que fibres de cellulose, charges éventuelles, divers additifs usuels de la fabrication du papier.

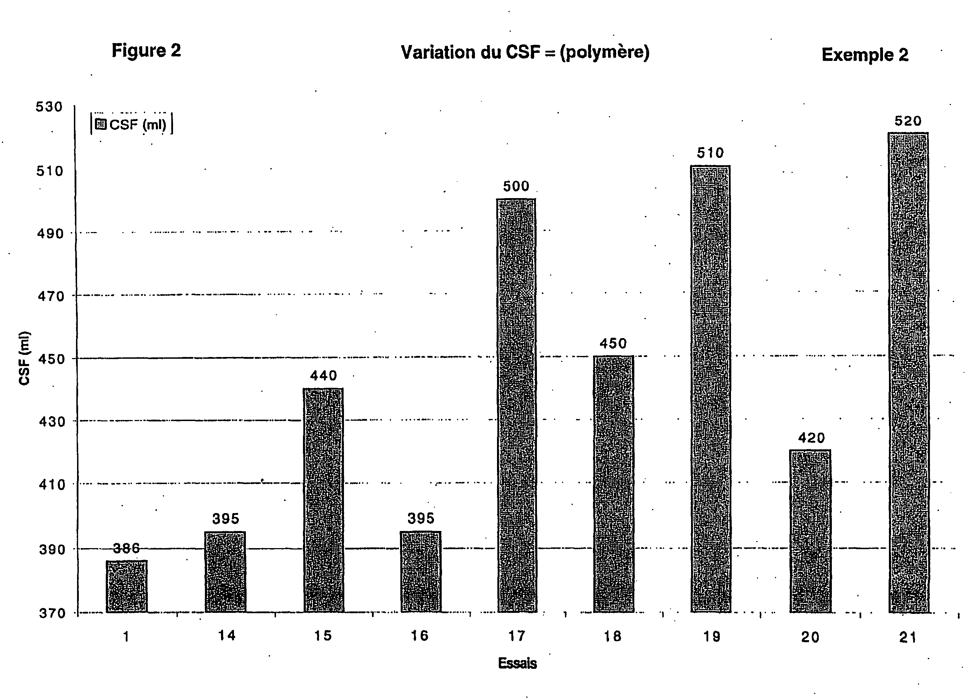

Le second agent de rétention, ou agent de rétention secondaire, comme la bentonite ou un kaolin préférentiellement prétraité, est ajouté ensuite et sans cisaillement intercalaire dans ladite pâte, ou bien avec un cisaillement intercalaire « facultatif », par exemple, en pratique, entre 5 et 30 secondes, de préférence entre environ 10 - 20 s, mais éventuellement jusqu'à 5 minutes, après l'introduction dans la pâte du polymère en émulsion inverse (ou solution de la poudre redissoute) cisaillée au préalable.
Les exemples suivants illustrent l'invention sans toutefois en limiter la portée. Les Figures 1 et 2 représentent les histogrammes correspondant aux Tableaux (I) et (II).

Les abréviations ont les sens indiqués ci dessous.

Colonne Essai = type de produit polymère utilisé

% = dosage de l'agent de rétention de la colonne essai en % agent / pâte sèche

% Cendres = % en poids des cendres (rétention de charges)
CSF = égouttage selon la norme CSF (Canadian Standard Freeness)
X désigne une mesure à la « première passe »

| Echelle de formation : | | |
|---|---|---|
| 1 | Excellent | (homogène) |
| 2 | Bon | (fondu) |
| 3 | Moyen | (nuageux) |
| 4 | Mauvais | ( moutonneux) |
| 5 | Très mauvais | ( marbré) |

## EXEMPLE 1

Fabrication d'un polymère réticulé sous forme d'émulsion inverse (PF 455 B)

Dans un réacteur A, on mélange à température ambiante les constituants de la phase organique de l'émulsion à synthétiser.

a) - Phase organique

- 252 g d'Exxsol D100
- 18 g de Span 80
- 4 g d'Hypermer 2296

b) - Dans un bêcher B, on prépare la phase aqueuse de l'émulsion à réaliser en mélangeant :

- 385 g d'acrylamide à 50 %
- 73 g de chlorure d'acrylate d'éthyl triméthyl ammonium (80 %)
- 268 g d'eau
- 0,5 g de méthylène bis acrylamide à 0,25 %
- 0,75 ml du bromate de sodium à 50 g $l^{-1}$
- 0,29 ml de Versenex à 200 g $l^{-1}$

On mélange le contenu de B dans A sans agitation. Après le mélange des phases, on cisaille l'émulsion au mixer pendant 1 minute afin de créer l'émulsion inverse. L'émulsion est alors dégazée par un bullage d'azote puis après 20 minutes, l'addition progressive du métabisulfite entraîne l'initiation puis la polymérisation.
La réaction terminée, on effectue un « burn out » (traitement par un bisulfite ou métabisulfite pour éliminer le monomère résiduel) afin de diminuer la teneur en monomère libre.
L'émulsion est alors incorporée avec son tensio-actif inverse afin de libérer par la suite le polymère en phase aqueuse. Il sera nécessaire d'introduire 2 à 2,4 % d'alcool éthoxylé. La viscosité Brookfield standard du .dit polymère sera de 1,8 cps (viscosité prise à 0,1 % dans une solution 1 M NaCl à 25°C à soixante tours par minute).

Les résultats en viscosité UL sont les suivants :

| Tableau de l'exemple 1 : | | | | | | |
|---|---|---|---|---|---|---|
| Essai | MBA ppm | NaH2PO2 ppm (*) | UL Viscosité | RI (1) (%) | RIV (2) (%) | Etat |
| EM 140 CT | 0 | 10 | 4,56 | 0 | 0 | Linéaire |
| PF 455 B | 10 | 0 | 1,80 | 80 | 100 | Réticulé |
| <<HYDROCOL>> (TM) CD3 (TM) | --- | --- | 4,10 | 0 | 0 | Linéaire |

(*) : hypophosphite de sodium, agent de transfert.
(1) : regain ionique RI en %.
(2) : regain de viscosité intrinsèque R IV en %.
EM140CT: émulsion standard de très haut poids moléculaire ne contenant aucun agent réticulant.

On note que les produits linéaires ne développent pas de regain ionique RI au cisaillement et voient leur viscosité intrinsèque IV diminuer (deux des valeurs de R IV sont nulles).
Le produit réticulé développe un fort regain ionique et un très fort regain de IV.

Définitions des regains ioniques et regains de viscosité intrinsèque:

$$\text{Regain ionique RI} = (X-Y)/Y \times 100$$

avec X : ionicité après cisaillement en meq/g.
Y : ionicité avant cisaillement en meq/g.

Regain de viscosité intrinsèque R IV = (V1 - V2) / V2 x 100

avec V1 : viscosité intrinsèque après cisaillement en dl/g
V2 : viscosité intrinsèque avant cisaillement en dl/g

Une partie des émulsions citées ci-dessus feront l'objet d'une étude d'efficacité en rétention égouttage sur une formette automatique du Centre Technique du Papier.

**Procédure de test des émulsions**

Pâte utilisée :

| | |
|---|---|
| mélange de 70 % de kraft de feuillus blanchis | KF |
| 10 % de kraft de résineux blanchis | KR |
| 20 % de pâte mécanique | PM |
| 20 % de carbonate de calcium naturel. | |

Collage en milieu neutre avec 2 % d'une émulsion d'alkyle cétène dimère.
La pâte utilisée est diluée à une consistance de 1,5 %. On prélève 2,24 g sec de pâte, soit 149 g de pâte à 150 % puis l'on dilue à 0,4 % avec des eaux claires.

Le volume de 560 ml est introduit dans le cylindre en plexiglas de la formette automatisée (normalisée) et l'on démarre la séquence selon deux procédures A et B:

**Procédure A:**

(fort cisaillement de la pâte à 1500 trs/min. durant 50 secondes)

- t = 0 s, démarrage agitation à 1500 trs/min (fort cisaillement)
- t = 10 s, addition du polymère (à l'état cisaillé selon l'invention lorsqu'il s'agit du produit réticulé)
- t = 60 s, réduction automatique à 1000 rpm et addition si nécessaire de la bentonite.
- t = 75 s, arrêt de l'agitation, formation de la feuille avec le vide sous toile puis récupération des eaux blanches.

**Procédure B:**

(simple turbulence de la pâte durant 10 secondes)

- t = 0 s, démarrage agitation imposé à 800 trs/min (pas de fort cisaillement)
- t =10 s, addition du polymère (à l'état cisaillé selon l'invention lorsqu'il s'agit du produit réticulé).
- t = 20 s, addition si nécessaire de la bentonite, toujours à 800 trs/min.
- t=30 s, arrêt de l'agitation, formation de la feuille avec le vide sous toile puis récupération des eaux blanches.

On effectue ensuite les opérations suivantes:

- mesure de la turbidité des eaux sous toile.
- dilution d'un bêcher de pâte épaisse pour une nouvelle feuille avec les eaux sous toiles recueillies.
- séchage de la feuille dite 1 ère passe.
- démarrage d'une nouvelle séquence afin de réaliser la feuille dite 2nde passe.

Après 3 passes, l'on change de produits à tester.
Les analyses suivantes sont alors réalisées :

- mesure des matières en suspension des eaux sous toile (Norme TAPPI T 656 cm / 83 )
- mesure des cendres des feuilles, (Norme TAPPI : T 211 om - 93 )
- mesure de la turbidité 30' après que les fibres soient déposées afin de connaître l'état de neutralisation des matières colloidales.
- mesure du degré d'égouttabilité de la pâte avec un Canadian Standard Freeness (CSF; Norme TAPPI T 227 om - 94).

**Commentaires des résultats cf. Tableau (I) comparatif ci-après relatif à l'exemple 1**

Dans le Tableau (I), on a effectué des essais sur divers produits et selon les deux procédures (A) et (B);
L'exemple 3 correspond à un polymère linéaire proche de la technique «HYDROCOL» (TM) du USP '710 précité (polymère linéaire). Les résultats sont donc proches de l'essai 7 qui correspond à la technique du USP '710. De même, les essais 2 et 6 sont comparables (polymère linéaire mais absence de bentonite).
L'examen des essais 3, 7 et 2, 6 confirme que la bentonite apporte des performances intéressantes.
L'essai 5 correspond à une émulsion de polymère réticulé, cisaillée avant injection dans la pâte, et donc selon l'invention, qui conduit à une performance extrêmement favorable d'égouttage (CSF Canadian Standard Freeness) tout en présentant une excellent formation (indice 1 contre 2 pour les autres essais comparables).
Ceci est tout à fait surprenant, car l'homme de métier sait que lorsque l'on parvient à augmenter l'égouttage, la formation est affectée négativement. Selon l'invention, au contraire, la formation n'est pas affectée.
Par ailleurs, la clarté des eaux sous toile est nettement améliorée, cf. très faible turbidité de 122 contre 134 - 159 («HYDROCOL» (TM)).
Ainsi, de manière surprenante, l'emploi d'un polymère réticulé (au lieu de linéaire) et cisaillé avant son injection conduit à une nette amélioration par rapport au système «HYDROCOL» (TM), tout en affranchissant le papetier de la contrainte de cisaillement de la pâte entre les deux ajouts de polymère et de bentonite.
Dans les essais 8 à 13, on a vérifié l'effet obtenu si l'on tente de s'affranchir du cisaillement de la pâte entre les deux ajouts, contrairement au USP '710. On voit que, dans un contexte «HYDROCOL» (TM), il est important de cisailler la pâte. En effet, on peut obtenir une très forte flocculation si l'on ne cisaille pas la pâte, mais la formation s'effondre (indices de 4 ou 5), ce qui est inexploitable.

Si l'on compare l'essai 5 (A) (cisaillement de la pâte) avec l'essai 11(B) (même essai sans cisaillement de la pâte), on voit que l'invention (11) améliore les caractéristiques d'égouttage, apporte une bonne turbidité, tandis que la formation reste excellente (indice 2 au lieu de 1).

Si l'on compare enfin l'essai 11 (invention, fortement réticulé) à l'essai 7 (produit commercial «HYDROCOL» (TM), linéaire), on voit que le procédé selon l'invention améliore nettement l'égouttage (512 vs. 458), soit + 34 %, à formation égale (indice 2) ce qui est tout à fait surprenant, puisque l'on s'attendait à voir cette formation décroître fortement, améliore la turbidité (104 vs. 175) et améliore la rétention de charges (% cendres X = %cendres à la première passe) ( 100 vs. 90,4).

**EXEMPLE 2**

Fabrication d'un polymère réticulé à base d'acrylate d'éthyl tri-méthyl ammonium chlorure sous forme d'émulsion de type EM 240 BD :

Dans un réacteur A, on mélange à température ambiante les constituants de la phase organique de l'émulsion à synthétiser.

a) - Phase organique :

- 266 g d' »Exxsol D100 » (TM)
- 18 g de « Span 80 » (TM)
- 6 g d' »Hypermer 2296 » (TM).

b) - Dans un bécher B, on prépare la phase de l'émulsion à réaliser en mélangeant :

- 438 g d'acrylamide à 50 %
- 186,5 g de chlorure d'acrylate d'éthyl triméthyl ammonium (80 %)
- 85 g d'eau
- 0,31 ml de méthylène bis acrylamide à 6 g/l
- 1,50 ml de bromate de sodium à 50 g/l
- 0,24 ml de Versenex à 200 g/l
- pH : 4.

On mélange le contenu de B dans A sous agitation. Après le mélange des phases, on cisaille l'émulsion au mixer pendant 1 minute afin de créer l'émulsion inverse.

L'émulsion est alors dégazée par un bullage d'azote puis après 20 minutes, l'addition progressive du métabisulfite entraîne l'initiation puis la polymérisation.

La réaction terminée, on effectue un « burn out » afin de diminuer la teneur en monomère libre.

L'émulsion est alors incorporée avec son tensio-actif inverseur afin de libérer par la suite le polymère en phase aqueuse.

Tableau de l'exemple 2 :

| Essai | MBA ppm | NaH2PO2 ppm (*) | UL Viscosité | RI (1) (%) | RIV (2) (%) | Etat |
|---|---|---|---|---|---|---|
| EM 240 CT | 0 | 10. | 4,20 | 0 | 0 | Linéaire |
| EM 240 BD | 10 | 0 | 1,6 | 58 | 55 | Réticulé |

**Procédure de test des émulsions**

(procédure identique à celle de l'exemple 1)

**Commentaires des résultats cf. Tableau (II) comparatif ci-après relatif à l'exemple 2**

L'exemple 2 appelle le même type de conclusions que l'exemple 1.

Selon l'invention, on maintient la formation à un excellent niveau 2. On augmente notablement l'égouttage, la rétention de charges et la rétention première passe.

Si l'on compare les essais série A et série B, sur un produit linéaire type «HYDROCOL» (TM) avec bentonite (15) on voit que sans cisaillement de la pâte, la formation chute de 2 à une valeur catastrophique de 5 ; par contre, avec cisaillement de la pâte, la formation reste à l'indice 2. Par conséquent, pour un produit linéaire comparatif type «HYDROCOL» (TM), le cisaillement de la pâte est esssentiel.

Au contraire, sur un produit réticulé selon l'invention, si l'on compare les essais 17 et 21, on voit que sans cisaillement de la pâte on améliore l'égouttage, on maintient de plus la rétention de charges sur la toile (% cendres) et la rétention première passe (% Rét. X). Avec cisaillement de la pâte, on dégrade certes légèrement l'égouttage (CSF), ainsi que la rétention et ainsi que la turbidité mais la formation reste à un très bon niveau (indice 2). Selon l'invention, il est donc tout à fait préférable de ne pas cisailler la pâte entre l'ajout de polymère réticulé cisaillé et l'ajout de bentonite, mais un cisaillement intercalaire conduit encore à une bonne combinaison de propriétés.

L'invention est donc compatible avec tous les équipements papetiers existants, y compris ceux où le choix du point d'injection du polymère ne peut pas être effectué librement.

Par ailleurs, l'invention apporte un avantage additionnel important en ce qui concerne une très bonne formation de la feuille. La formation désigne comme on le sait des qualités de la feuille telles que l'homogénéité, et analogues. Cet avantage est attribuable à la microfloculation provoquée par les agents cisaillés selon l'invention.

**EXEMPLE 3**

Fabrication d'un polymère sous forme de poudre redissoute (SD 455 B).

On met en oeuvre à nouveau l'exemple 1 pour préparer le produit PF 455 B en émulsion inverse.
On sèche cette émulsion inverse par une technique connue de séchage par pulvérisation ; on obtient une poudre blanche que l'on redissout dans de l'eau, à 5 g de polymère par litre.
On cisaille ensuite cette solution à l' « Ultra Turax» (TM) comme décrit ci-dessus, dans les mêmes conditions que pour le cisaillement de l'émulsion inverse PF 455 B de l'exemple 1 (bien entendu inversée à l'eau avant cisaillement).

| Tableau de l'exemple 3 | | | | | | |
|---|---|---|---|---|---|---|
| Essai | MBA ppm | NaH2PO2 ppm (*) | UL Viscosité | RI (1) (%) | RIV (2) (%) | Etat |
| EM140 CT | 0 | 10 | 4,56 | 0 | 0 | Linéaire |
| PF 455 B | 10 | 0 | 1,80 | 80 | 100 | Réticulé |
| SD 455 B | 10 | 0 | 1,85 | 85 | 100 | Réticulé |
| SD 455 B = solution de la poudre obtenue par séchage de l'émulsion inverse PF 455 B. EM140CT = émulsion standard de très haut poids moléculaire ne contenant aucun agent réticulant. | | | | | | |

**Commentaires sur les résultats, cf. Tableau (III) comparatif relatif à l'exemple 3.**

L'examen du Tableau (III) montre que la solution cisaillée avant injection, S D 455 B, obtenue par dissolution dans l'eau à 5 g de polymère / litre de la poudre obtenue par séchage de l'émulsion PF 455 B par pulvérisation, se comporte sensiblement comme l'émulsion cisaillée elle même.

**Tableau comparatif des résultats de l'exemple1**

Tableau (I)

| n°essai | Essai | % | Bentonite | % | Turbidité X | % Rét.X | % cendres X | Turbidité30' X | CSF (ml) | Formation | Séquence |
|---|---|---|---|---|---|---|---|---|---|---|---|
| 1 | Blanc | 0 | 0 | 0 | >4000 | 83,3 | 10,7 | 2660 | 388 | 1 | A |
| 2 | EM140CT | 0,05 | 0 | 0 | 780 | 93,5 | 75,4 | 33 | 392 | 2 | A |
| 3 | EM140CT | 0,05 | CPB1 | 0,2 | 134 | 96,8 | 92,0 | 11 | 450 | 2 | A |
| 4 | PF455B | 0,05 | 0 | 0 | 1666 | 92,4 | 65,2 | 42 | 390 | 1 | A |
| 5 | PF455B | 0,05 | CPB1 | 0,2 | 122 | 96,9 | 95,2 | 15 | 498 | 1 | A |
| 6 | Hydrocol CD3 | 0,05 | 0 | 0 | 800 | 93,9 | 73,2 | 30 | 398 | 2 | A |
| 7 | Hydrocol CD3 | 0,05 | CPB1 | 0,05 | 159 | 96,5 | 90,4 | 16 | 458 | 2 | A |
| 8 | EM140CT | 0,05 | 0 | 0 | 175 | 96,8 | 92,2 | 36 | 445 | 4 | B |
| 9 | EM140CT | 0,05 | CPB1 | 0,2 | 104 | 97,9 | 100 | 26 | 500 | 5 | B |
| 10 | PF455B | 0,05 | 0 | 0 | 257 | 96,1 | 88,7 | 35 | 412 | 2 | B |
| 11 | PF455B | 0,05 | CPB1 | 0,2 | 104 | 97,6 | 100 | 21 | 512 | 2 | B |
| 12 | Hydrocol CD3 | 0,05 | 0 | 0 | 195 | 96,3 | 86,1 | 26 | 438 | 4 | B |
| 13 | Hydrocol CD3 | 0,05 | CPB1 | 0,2 | 148 | 96,9 | 91,9 | 33 | 501 | 5 | B |

## Tableau comparatif des résultats de l'exemple 2

Tableau (II)

| n°essai | Essai | % | Bentonite | % | Turbidité X | % Rét.X | % cendres X | Turbidité30' X | CSF (ml) | Formation | Séquence |
|---|---|---|---|---|---|---|---|---|---|---|---|
| 1 | Blanc | 0 | 0 | 0 | 4000 | 83,3 | 10,7 | 2660 | 388 | 1 | A |
| 14 | EM240 CT | 0,05 | 0 | 0 | 600 | 94 | 80 | 40 | 395 | 2 | A |
| 15 | EM240 CT | 0,05 | CPB1 | 0,2 | 140 | 97 | 93 | 15 | 440 | 2 | A |
| 16 | EM240 BD | 0,05 | 0 | 0 | 1200 | 93 | 70 | 45 | 395 | 1 | A |
| 17 | EM240BD | 0,05 | CPB1 | 0,2 | 110 | 97,5 | 95 | 14 | 500 | 1 | A |
| 18 | EM240 CT | 0,05 | 0 | 0 | 180 | 97 | 93 | 30 | 450 | 4 | B |
| 19 | EM240 CT | 0,05 | CPB1 | 0,2 | 100 | 98 | 100 | 20 | 510 | 5 | B |
| 20 | EM240 BD | 0,05 | 0 | 0 | 250 | 96 | 90 | 40 | 420 | 2 | B |
| 21 | EM240BD | 0,05 | CPB1 | 0,2 | 95 | 98,5 | 100 | 10 | 520 | 2 | B |

Tableau (III)

## Tableau comparatif des résultats de l'exemple 3

| n°essai | Essai | % | Bentonite | % | Turbidité X | % Rét.X | % cendres X | Turbidité30' X | CSF (ml) | Formation | Séquence |
|---|---|---|---|---|---|---|---|---|---|---|---|
| 1 | Blanc | 0 | 0 | 0 | 4000 | 83,3 | 10,7 | 2660 | 388 | 1 | B |
| 22 | PF455B | 0,05 | 0 | 0 | 257 | 96,1 | 88,6 | 35 | 412 | 2 | B |
| 23 | PF455B | 0,05 | CPB1 | 0,2 | 104 | 97,6 | 100 | 21 | 512 | 2 | B |
| 24 | SD455B | 0,05 | 0 | 0 | 260 | 96 | 88,9 | 32 | 420 | 2 | B |
| 25 | SD455B | 0,05 | CPB1 | 0,2 | 102 | 97,5 | 100 | 19 | 510 | 2 | B |

## Revendications

1. Procédé pour la fabrication d'une feuille de papier ou carton ou analogues, présentant des caractéristiques améliorées de rétention et d'égouttage, du type selon lequel on utilise un système dual de polymère de type acrylique et de bentonite ou un kaolin éventuellement traité comme agents primaire et secondaire, respectivement, de rétention, **caractérisé e n ce qu'il** incorpore des opérations qui consistent à ajouter à la suspension ou masse fibreuse à floculer, ou pâte à papier,

   **a)** un (co)polyacrylamide, comme agent de rétention principal, qui est réticulé et se présente sous la forme d'une émulsion inverse ou eau-dans-huile (« inversée » à l'eau), ou d'une solution de la poudre obtenue par séchage de ladite émulsion inverse, ladite émulsion ou solution étant cisaillée préalablement à l'introduction ou injection dans la masse fibreuse tel qu'on effectue le cisaillement de l'émulsion inverse de polymère (solution « inversée » à l'eau) ou de la solution obtenue par redissolution dans l'eau de la poudre obtenue par séchage de l'émulsion inverse de synthèse, avant l'injection dans la pâte, à une concentration de l'ordre de 3 - 5 à 10 - 15 g de matière active ( cad le polymère) / litre d'émulsion du polymère, de préférence entre 5 et 10 g/l, à 10.000 tours/minute ou dans un mixer ou mélangeur ménager, sensiblement au même ordre de grandeur de vitesse de rotation, durant une durée comprise entre 15 - 30 secondes et 2 - 5 minutes, et on obtient par le cisaillement de l'émulsion inverse « inversée » à l'eau ou de la solution de la poudre de séchage de l'émulsion de synthèse, avant l'injection dans la pâte, un regain ionique IR de 40 à 50 % ou pouvant atteindre au moins 60 ou 70 % et même plus, jusqu'à des valeurs suPpérieures ou très supérieures à 100 %, avec:

   $$\text{Regain Pionique IR} = (X-Y)/Y \times 100$$

   avec X : ionicité après cisaillement en meq/g,
   Y : tonicité avant cisaillement en meq/g, et

   **b)** ensuite un second agent de rétention (système dit « dual », « microparticulaire »)

   c) sans étape de fort cisaillement de la pâte entre les ajouts a) et b) ou avec une étape de cisaillement de la pâte entre les ajouts a) et b).

2. Procédé selon la revendication 1, **caractérisé en ce qu'**il n'y a pas d'étape de fort cisaillement de la pâte entre les ajouts a) et b).

3. Procédé de fabrication d'une feuille de papier ou carton ou analogue, selon l'une quelconque des revendications 1 ou 2, **caractérisé en ce que** l'on utilise, pour préparer ledit (co)polymère, des monomères choisis parmi les monomères non ioniques.

4. Procédé de fabrication d'une feuille de papier ou carton ou analogue, selon l'une quelconque des revendications 1 à 3, **caractérisé en ce que** au moins une partie des monomères utilisés pour former le polymère est ionique.

5. Procédé de fabrication d'une feuille de papier ou carton ou analogue, selon l'une quelconque des revendications 1 à 4, **caractérisé en ce que** les monomères sont des monomères à insaturation monoéthylénique, ou des monomères allyliques, ou des monomères vinyliques, notamment des monomères acryliques ou méthacryliques.

6. Procédé selon l'une quelconque des revendications 1 à 5, **caractérisé en ce que** le (co)polymère acrylique réticulé en émulsion inverse (« inversée » à l'eau) ou en solution de la poudre obtenue par séchage de l'émulsion inverse de synthèse est introduit dans la pâte à papier à une concentration de 0,03 à un pour mille (0,03 a 1 %o) en poids, du poids sec de la suspension fibreuse de pâte à papier, de préférence 0,15 à 0,5 pour mille (0,15 à 0,5 %o), soit entre 30 et 1000 g/t, de préférence 150 et 500 g/t.

7. Procédé selon l'une quelconque des revendications 1 à 6, **caractérisé en ce que** le (co)polymère acrylique réticulé préparé en émulsion inverse est un copolymère cationique d'acrylamide et d'un monomère éthylénique cationique non saturé, choisi dans le groupe comprenant l'acrylate de dimethylaminoethyl (ADAME), le methacrylate de dimethylaminoethyle (MADAME), quaternisés ou salifiés par différents acides et agents quatemisants, benzyle chlorure, méthyle chlorure, alkyl- ou aryle chlorure, diméthyle sulfate, le chlorure de diméthyldiallylammonium (DADMAC), le chlorure d'acrylamidopropyltrimethylammonium (APTAC), et le chlorure de methacrylamidopropyltrimethylammonium (MAPTAC).

**8.** Procédé selon l'une quelconque des revendications 1 à 7, **caractérisé en ce que** le (co)polymère acrylique réticulé préparé en émulsion inverse est un copolymère d'acrylamide et de chlorure d'acrylate d'éthyl triméthyl ammonium.

**9.** Procédé selon l'une quelconque des revendications 1 à 8, **caractérisé en ce que** le (co)polymère acrylique réticulé préparé en émulsion inverse est réticulé par un agent de réticulation constitué par un composé polyfonctionnel présentant au moins deux groupements réactifs choisis dans le groupe comprenant les doubles liaisons, les liaisons aldéhydes ou les liaisons epoxy, les agents de réticulation que l'on peut incorporer comprenant des agents de réticulation ioniques comme les sels de métal polyvalent, le formaldéhyde, le glyoxal, ou des agents de réticulation covalents qui vont copolymériser avec les monomères, de préférence des monomères à insaturation diéthylénique (comme la famille des esters de diacrylates comme les diacrylates de polyéthylène glycols PEG) ou polyéthylénique, et notamment le méthylènebisacrylamide (MBA).

**10.** Procédé selon l'une quelconque des revendications 1 à 9, **caractérisé en ce que** le (co)polymère acrylique réticulé en émulsion inverse est réticulé par un agent de réticulation constitué par le methylènebisacrylamide (MBA).

**11.** Procédé selon la revendication 10, **caractérisé en ce que** le MBA est introduit à une concentration de 5 à 200 moles par million de moles de monomères, de préférence 5 à 50, de préférence 10 ou 20.

**12.** Procédé selon l'une quelconque des revendications 1 à 9, **caractérisé en ce que** le second agent de rétention est une bentonite.

**13.** Procédé selon la revendication 12, **caractérisé en ce que** la bentonite est une bentonite semi-sodique, utilisée à raison de 0,1 a 0,5 pour cent (0,1 a 0,5 %) du poids sec de la suspension fibreuse.

**14.** Procédé selon l'une quelconque des revendications 1 à 13, **caractérisé en ce que** la pâte utilisée contenant la charge est diluée, puis on ajoute le polymère comme agent de rétention principal, puis on ajoute la bentonite comme agent de rétention secondaire.

**15.** Procédé selon l'une quelconque des revendications 1 à 14, **caractérisé en ce que** la quantité de polyacrylamide. réticulé (ou plus généralement de (co)polymère acrylique réticulé). introduit en émulsion inverse eàu-dans-huile, « inversée » à l'eau, ou sous forme de la solution de la poudre obtenue par séchage de ladite émulsion, est comprise entre 0,03 et 1 %o, soit entre trente et mille grammes/tonne (30 et 1000 g/t) de pâte sèche

**16.** Procédé selon l'une quelconque des revendications 1 à 15, **caractérisé en ce que** la quantité de polyacrylamide réticulé (ou plus généralement de (co)polymère acrylique réticulé) introduit en émulsion inverse eau-dans-huile, « inversée » à l'eau, ou sous forme de la solution de la poudre obtenue par séchage de ladite émulsion est comprise entre 0,15 et 0,5 %o (soit entre 150 et 500 g/t).

**17.** Procédé selon l'une quelconque des revendications 12 à 16, **caractérisé en ce que** la bentonite est remplacée par du kaolin, éventuellement prétraité par un polyelectrolyte, comme agent de rétention secondaire.

**18.** Procédé selon l'une quelconque des revendications 1 à 17, **caractérisé en ce que** l'injection ou introduction du polymère réticulé en émulsion inverse, « inversée » à l'eau, cisaillée, ou sous forme de la solution cisaillée de la poudre obtenue par séchage de ladite émulsion est effectuée dans la pâte à papier (ou masse fibreuse à floculer) diluée ou « thin stock », cad une pâte diluée à environ 1,5 % de matières solides telles que fibres de cellulose, charges éventuelles, divers additifs usuels de la fabrication du papier,
et le second agent de rétention, ou agent de rétention secondaire, comme la bentonite ou un kaolin préférentiellement prétraité, est ajouté ensuite entre 5 et 30 s, de préférence entre environ 10 - 20 s , ou jusqu'à environ 5 minutes, après l'introduction du polymère.

**19.** Procédé de fabrication d'une feuille de papier ou carton ou analogue, selon l'une quelconque des revendications 1 à 18, **caractérisé en ce que** l'on effectue le cisaillement dans des pompes haute pression en recirculation ou des turbines

**20.** Procédé de fabrication d'une feuille de papier ou carton ou analogue, selon l'une quelconque des revendications 1 à 19 **caractérisé en ce que** l'on effectue un dosage de l'agent selon l'invention sera tel qu'il conduise à environ 100 à 500 g de matière active (polymère) par tonne de matière fibreuse à traiter

**21.** Procédé de fabrication d'une feuille de papier ou carton ou analogue, selon l'une quelconque des revendications 1 à 20, **caractérisé en ce que** l'on utilise un polymère présentant une viscosité intrinsèque i.v. aussi faible que 1 à 3, qui devient une viscosité intrinsèque aussi élevée que 3 -7 ou 8 après l'application du cisaillement.

**Patentansprüche**

**1.** Verfahren zur Herstellung eines Bogens Papier oder Pappe oder dergleichen, der verbesserte Retentions- und Abtropfeigenschaften aufweist, von der Art, nach der ein duales Polymersystem der Acryl- und Bentonitart oder ein Kaolin verwendet wird, die gegebenenfalls als Primär- und Sekundär- bzw. Retentionsmittel behandelt werden, **dadurch gekennzeichnet, dass** das Verfahren Arbeitsschritte umfasst, die daraus bestehen, der auszuflockenden Suspension oder Fasermasse oder dem Papierbrei,

a) ein (Co)polyacrylamid als Haupttretentionsmittel zuzugeben, das vernetzt ist und sich in Form einer inversen oder Wasser-in-Öl-Emulsion (in Wasser "invertierten" Emulsion) oder einer Lösung des Pulvers darstellt, das durch Trocknen der inversen Emulsion erhalten wird, wobei die Emulsion oder Lösung vor der Zugabe zu der oder das Einspritzen in die Fasermasse so abgeschert wird,
dass das Abscheren der inversen Polymeremulsion (der in Wasser "invertierten" Lösung) oder der Lösung, die vor dem Einspritzen in den Brei durch Wiederauflösen in Wasser des Pulvers erhalten wird, das durch Trocknen der inversen Syntheseemulsion in einer Konzentration in der Größenordnung von 3 - 5 bis 10 - 15 g an Füllmasse (d.h. Polymer)/Liter Polymeremulsion erhalten wird, vorzugsweise von 5 bis 10 g/l bei 10.000 Umdrehungen/Minute entweder in einem Mixer oder Haushaltsmischer im Wesentlichen mit derselben Größenordnung an Drehgeschwindigkeit eine Dauer von 15 - 30 Sekunden und 2 bis 5 Minuten lang durchgeführt wird, und
durch das Abscheren der inversen, in Wasser "invertierten" Emulsion oder der Lösung des Trockenpulvers der Syntheseemulsion vor dem Einspritzen in den Brei ein Ionenwiedergewinn IR von 40 bis 50% oder bis zu mindestens 60 oder 70% oder sogar darüber erzielt wird, bis zu Werten über oder deutlich über 100%, wobei

$$\text{Ionenwiedergewinn IR} = (X-Y)/Y \times 100$$

wobei

X : Ionizität nach dem Abscheren in meq/g,
Y : Ionizität vor dem Abscheren in meq/g,

b) dann ein zweites Retentionsmittel zugegeben wird ("dual" genanntes System der "mikropartikulären" Art)

c) ohne einen Schritt starken Abscherens des Breis zwischen den Zugaben a) und b), oder mit einem Abscherschritt des Breis zwischen den Zugaben a) und b).

**2.** Verfahren nach Anspruch 1, **dadurch gekennzeichnet, dass** es keinen Schritt starken Abscherens des Breis zwischen den Zugaben a) und b) gibt.

**3.** Verfahren nach einem der Ansprüche 1 oder 2, zur Herstellung eines Bogens Papier oder Pappe oder dergleichen, **dadurch gekennzeichnet, dass** zur Herstellung des (Co)polymers Monomere verwendet werden, die aus nicht ionischen Monomeren ausgewählt sind.

**4.** Verfahren nach einem der Ansprüche 1 bis 3, zur Herstellung eines Bogens Papier oder Pappe oder dergleichen, **dadurch gekennzeichnet, dass** zumindest ein Teil der Monomere, die zur Ausbildung des Polymers verwendet werden, ionisch ist.

**5.** Verfahren nach einem der Ansprüche 1 bis 4, zur Herstellung eines Bogens Papier oder Pappe oder dergleichen, **dadurch gekennzeichnet, dass** die Monomere einfach ungesättigte Ethylenmonomere oder Allylmonomere oder Vinylmonomere, insbesondere Acryl- oder Methacrylmonomere sind.

6. Verfahren nach einem der Ansprüche 1 bis 5, **dadurch gekennzeichnet, dass** das vemetzte Acryl(co)polymer in inverser (in Wasser "invertierter") Emulsion oder in Lösung des Pulvers, das durch Trocknen der inversen Syntheseemulsion gewonnen wird, dem Papierbrei mit einer Konzentration von 0, 03 bis ein Gew.-Promille (0,03 bis 1 Gew.-%o) des Trockengewichts der Papierbreifasersuspension, vorzugsweise 0,15 bis 0,5 Gew.-Promille (0,15 bis 0,5 Gew.-%o), sprich 30 bis 1000 g/t, vorzugsweise 150 bis 500 g/t zugegeben wird.

7. Verfahren nach einem der Ansprüche 1 bis 6, **dadurch gekennzeichnet, dass** das in inverser Emulsion hergestellte vernetzte Acryl(co)polymer ein kationisches Copolymer von Acrylamid und eines nichtgesättigten kationischen Ethylenmonomers ist, das aus der Gruppe ausgewählt ist, die Dimethylaminoethylacrylat (ADAME), Dimethylaminoethylmethacrylat (MADAME), die durch verschiedene Säuren und Quaternisierungsmittel quaternisiert oder salzbildend gemacht sind, Benzylchlorid, Methylchlorid, Alkyl- oder Arylchlorid, Dimethylsulfat, Dimethyldiallylammoniumchlorid (DADMAC), Acrylamidpropyltrimethylammoniumchlorid (APTAC) und Methacrylamidpropyltrimethylammoniumchlorid (MAPTAC) enthält.

8. Verfahren nach einem der Ansprüche 1 bis 7, **dadurch gekennzeichnet, dass** das in inverser Emulsion hergestellte vernetzte Acryl(co)polymer ein Copolymer aus Acrylamid und Ethyltrimethylammoniumchloridacrylat ist.

9. Verfahren nach einem der Ansprüche 1 bis 8, **dadurch gekennzeichnet, dass** das in inverser Emulsion hergestellte vernetzte Acryl(co)polymer durch ein Vernetzungsmittel vemetzt wird, das aus einer polyfunktionalen Verbindung besteht, die mindestens zwei reaktive Gruppierungen aufweist, die aus der Gruppe ausgewählt sind, die Doppelbindungen, Aldehydbindungen oder Epoxidbindungen aufweisen, wobei die Vernetzungsmittel, die beigemengt werden können, ionische Vernetzungsmittel umfassen, wie polyvalente Metallsalze, Formaldehyd, Glyoxal, oder auch kovalente Vernetzungsmittel, die mit den Monomeren copolymerisieren, vorzugsweise diethylenungesättigte Monomere (wie die Familie der Diacrylatester wie die Diacrylate von Polyethylenglycolen PEG) oder polyethylenungesättigte Monomere und insbesondere Methylenbisacrylamid (MBA).

10. Verfahren nach einem der Ansprüche 1 bis 9, **dadurch gekennzeichnet, dass** das in inverser Emulsion hergestellte vemetzte Acryl(co)polymer durch ein Vernetzungsmittel vernetzt wird, das aus Methylenbisacrylamid (MBA) besteht.

11. Verfahren nach Anspruch 10, **dadurch gekennzeichnet, dass** das MBA in einer Konzentration von 5 bis 200, vorzugsweise 5 bis 50, vorzugsweise 10 oder 20 Mol pro Million Mol an Monomeren zugegeben wird.

12. Verfahren nach einem der Ansprüche 1 bis 9, **dadurch gekennzeichnet, dass** das zweite Retentionsmittel Bentonit ist.

13. Verfahren nach Anspruch 12, **dadurch gekennzeichnet, dass** der Bentonit ein Bentonit mit halbem Natriumgehalt ist, der in einer Menge von 0,1 bis 0,5 Prozent (0,1 bis 0,5%) des Trockengewichts der Fasersuspension verwendet wird.

14. Verfahren nach einem der Ansprüche 1 bis 13, **dadurch gekennzeichnet, dass** der den Füllstoff enthaltende verwendete Brei verdünnt wird, dann das Polymer als Hauptretentionsmittel und dann Bentonit als sekundäres Retentionsmittel beigegeben wird.

15. Verfahren nach einem der Ansprüche 1 bis 14, **dadurch gekennzeichnet, dass** die Menge des vernetzten Polyacrylamids (oder allgemeiner, des vernetzten Acryl(co)polymers), die in inverser, in Wasser "invertierter", Wasser-in- Öl-Emulsion oder in Form des Pulvers beigegeben wird, das durch Trocknen der Emulsion erhalten wird, 0,03 bis 1 %o beträgt, sprich dreißig bis tausend Gramm/Tonne (30 bis 1000 g/t) Trockenmasse.

16. Verfahren nach einem der Ansprüche 1 bis 15, **dadurch gekennzeichnet, dass** die Menge des vernetzten Polyacrylamids (oder allgemeiner, des vernetzten Acryl(co)polymers), die in inverser, in Wasser »invertierter", Wasser-in-Öl-Emulsion oder in Form des Pulvers beigegeben wird, das durch Trocknen der Emulsion erhalten wird, 0,15 bis 0,5 %o beträgt (sprich 150 bis 500 g/t).

17. Verfahren nach einem der Ansprüche 12 bis 16, **dadurch gekennzeichnet, dass der** Bentonit als sekundäres Retentionsmittel durch Kaolin ersetzt wird, das gegebenenfalls mit einem Polyelektrolyt vorbehandelt wird.

18. Verfahren nach einem der Ansprüche 1 bis 17, **dadurch gekennzeichnet, dass** das Einspritzen oder die Zugabe des vernetzten Polymers in inverser, in Wasser "invertierter", abgescherter Emulsion oder in Form der abgescherten Lösung des Pulvers, das durch Trocknen der Emulsion erhalten wird, in den oder zum verdünnten Papierbrei (oder der verdünnten auszuflockenden Fasermasse) oder "thin stock" stattfindet, d.h. einem auf ca. 1,5% an Feststoffen wie Zellulosefasern, gegebenenfalls Füllstoffen, verschiedenen Additiven, die für die Papierherstellung gebräuchlich sind, verdünnten Brei, und das zweite Retentionsmittel oder das sekundäre Retentionsmittel wie Bentonit oder vorzugsweise vorbehandeltes Kaolin dann nach der Zugabe des Polymers 5 bis 30 s, vorzugsweise 10 bis 20 s, oder bis zu ca. 5 Minuten lang zugegeben wird.

**19.** Verfahren nach einem der Ansprüche 1 bis 18, zur Herstellung eines Bogens Papier oder Pappe oder dergleichen, **dadurch gekennzeichnet, dass** das Abscheren in Hochdruckumwälzpumpen oder Turbinen stattfindet.

**20.** Verfahren nach einem der Ansprüche 1 bis 19, zur Herstellung eines Bogens Papier oder Pappe oder dergleichen, **dadurch gekennzeichnet, dass** die Dosierung des erfindungsgemäßen Mittels so eingestellt wird, dass sie ca. 100 bis 500 g Füllmasse (Polymer) pro Tonne zu bearbeitender Fasermasse ergibt.

**21.** Verfahren nach einem der Ansprüche 1 bis 20, zur Herstellung eines Bogens Papier oder Pappe oder dergleichen, **dadurch gekennzeichnet, dass** ein Polymer verwendet wird, das eine schwache Strukturviskosität I.V. von 1 bis 3 aufweist, die nach der Anwendung des Abscherens zu einer hohen Strukturviskosität von 3 - 7 oder 8 wird.

## Claims

**1.** A process for manufacturing a sheet of paper or paperboard or the like, having improved retention and drainage properties, of the type in which a dual system consisting of polymer of acrylic type and bentonite or a possibly treated kaolin is used as primary and secondary retention agents, respectively, **characterised in that** it incorporates operations consisting of adding to the suspension or fibrous mass to be flocculated, or papermaking pulp,

a) a (co)polyacrylamide, as main retention agent, which is cross-linked and is in the form of an invert or water-in-oil emulsion (water-"inverted"), or of a solution of the powder obtained by drying said invert emulsion, said emulsion or solution being sheared prior to the introduction or injection into the fibrous mass such that the shearing of the invert emulsion of polymer (water-"inverted" solution) or of the solution obtained by redissolving in the water the powder obtained by drying the synthesised invert emulsion, before the injection into the pulp, in a concentration of the order of 3 - 5 to 10 - 15 g of active material (that is to say, the polymer) / litre of emulsion of the polymer, preferably between 5 and 10 g/l, at 10,000 rpm or in a mixer or domestic mixer substantially at the same order of magnitude of speed of rotation, for a duration of between 15 - 30 seconds and 2 - 5 minutes, and there is obtained by the shearing of the water-"inverted" invert emulsion or of the solution of the powder from drying the synthesised emulsion, before the injection into the pulp, an ionic recovery IR of 40 to 50% or which may reach at least 60 or 70% and even more, up to values greater than or very much greater than 100%, where:

$$\text{ionic recovery IR} = (X-Y)/Y \times 100$$

where

X: ionicity after shearing in meq/g,
Y: ionicity before shearing in meq/g, and

b) then a second retention agent (so-called "dual" system, of "microparticle" type),

c) without a step of strong shearing of the pulp between the additions a) and b) or with a step of shearing of the pulp between the additions a) and b).

**2.** A process according to Claim 1, **characterised in that** there is no step of strong shearing of the pulp between the additions a) and b).

**3.** A process for manufacturing a sheet of paper or paperboard or the like according to any one of Claims 1 or 2, **characterised in that** monomers selected from among non-ionic monomers are used to prepare said (co)polymer.

4. A process for manufacturing a sheet of paper or paperboard or the like according to any one of Claims 1 to 3, **characterised in that** at least part of the monomers used to form the polymer is ionic.

5. A process for manufacturing a sheet of paper or paperboard or the like, according to any one of Claims 1 to 4, **characterised in that** the monomers are monoethylenically unsaturated monomers, or allyl monomers, or vinyl monomers, in particular acrylic or methacrylic monomers.

6. A process according to any one of Claims 1 to 5, **characterised in that** the cross-linked acrylic (co)polymer in invert emulsion (water-"inverted") or in solution of the powder obtained by drying of the synthesised invert emulsion is introduced into the papermaking pulp in a concentration of 0.03 to one per mil (0.03 to 1%o) by weight of the dry weight of the fibrous suspension of papermaking pulp, preferably 0.15 to 0.5 per mil (0.15 to 0.5 ‰). or between 30 and 1000 g/t, preferably 150 and 500 g/t.

7. A process according to any one of Claims 1 to 6, **characterised in that** the cross-linked acrylic (co)polymer prepared in invert emulsion is a cationic copolymer of acrylamide and of a cationic ethylenically unsaturated monomer, selected from the group comprising dimethylaminoethyl acrylate (ADAME), dimethylaminoethyl methacrylate (MADAME), which are quaternised or salified by different acids and quatemising agents, benzyl chloride, methyl chloride, alkyl or aryl chloride, dimethyl sulphate, diallyl dimethyl ammonium chloride (DADMAC), acrylamidopropyl trimethyl ammonium chloride (APTAC) and methacrylamidopropyl trimethyl ammonium chloride (MAPTAC).

8. A process according to any one of Claims 1 to 7, **characterised in that** the cross-linked acrylic (co)polymer prepared in invert emulsion is a copolymer of acrylamide and of ethyl trimethyl ammonium acrylate chloride.

9. process according to any one of Claims 1 to 8, **characterised in that** the cross-linked acrylic (co)polymer prepared in invert emulsion is cross-linked by a cross-linking agent constituted by a polyfunctional compound having at least two reactive groupings selected from the group comprising double bonds, aldehyde bonds or epoxy bonds, the cross-linking agents which can be incorporated comprising ionic cross-linking agents such as polyvalent metal salts, formaldehyde, glyoxal, or covalent cross-linking agents which will copolymerise with the monomers, preferably diethylenically unsaturated monomers (such as the family of diacrylate esters such as diacrylates of polyethylene glycols PEG) or polyethylenically unsaturated monomers, and in particular methylenebisacrylamide (MBA).

10. A process according to any one of Claims 1 to 9, **characterised in that** the cross-linked acrylic (co)polymer in invert emulsion is cross-linked by a cross-linking agent consisting of methylenebisacrylamide (MBA).

11. A process according to Claim 10, **characterised in that** the MBA is introduced in a concentration of 5 to 200 moles per million moles of monomers, preferably 5 to 50, preferably 10 or 20.

12. A process according to any one of Claims 1 to 9, **characterised in that** the second retention agent is a bentonite.

13. A process according to Claim 12, **characterised in that** the bentonite is a semi-sodic bentonite, used in an amount of 0.1 to 0.5 percent (0.1 to 0.5%) of the dry weight of the fibrous suspension.

14. A process according to any one of Claims 1 to 13, **characterised in that** the pulp used containing the filler is diluted, then the polymer is added as main retention agent, then the bentonite is added as secondary retention agent.

15. A process according to any one of Claims 1 to 14, **characterised in that** the quantity of cross-linked polyacrylamide (or more generally of cross-linked acrylic (co)polymer) introduced in an invert water-in-oil emulsion (water-"inverted"), or in the form of the solution of the powder obtained by drying said emulsion, is of between 0.03 and 1%o, or between thirty and one thousand grammes/tonne (30 and 1000 g/t) of dry pulp.

16. A process according to any one of Claims 1 to 15, **characterised in that** the quantity of cross-linked polyacrylamide (or more generally of cross-linked acrylic (co)polymer) introduced in an invert water-in-oil emulsion (water-"inverted"), or in the form of the solution of the powder obtained by drying said emulsion, is of between 0.15 and 0.5%o (or between 150 and 500 g/t).

17. A process according to any one of Claims 12 to 16, **characterised in that** the bentonite is replaced by kaolin, possibly pretreated with a polyelectrolyte, as secondary retention agent.

**18.** A process according to any one of Claims 1 to 17, **characterised in that** the cross-linked polymer in water-"inverted" invert emulsion which is sheared, or in the form of the sheared solution of the powder obtained by drying said emulsion is injected or introduced into the diluted papermaking pulp (or fibrous mass to be flocculated) or "thin stock", that is to say a pulp diluted to approximately 1.5% of solid material such as cellulose fibres, any fillers and various conventional papermaking additives,
and the second retention agent, or secondary retention agent, such as the bentonite or a preferably pretreated kaolin, is then added between 5 and 30 s, preferably between approximately 10 - 20 s, or up to approximately 5 minutes, after the introduction of the polymer.

**19.** A process for manufacturing a sheet of paper or paperboard or the like, according to any one of Claims 1 to 18, **characterised in that** the shearing is effected in high-pressure recirculating pumps or turbines.

**20.** A process for manufacturing a sheet of paper or paperboard or the like, according to any one of Claims 1 to 19, **characterised in that** the agent according to the invention is metered such that it results in approximately 100 to 500 g of active material (polymer) per tonne of fibrous material to be treated.

**21.** A process for manufacturing a sheet of paper or paperboard or the like according to any one of Claims 1 to 20, **characterised in that** a polymer having an intrinsic viscosity i.v. as low as 1 to 3, which becomes an intrinsic viscosity as high as 3 -7 or 8 after the application of the shearing, is used.

Figure 1

Variation du CSF = (polymère)

Exemple 1

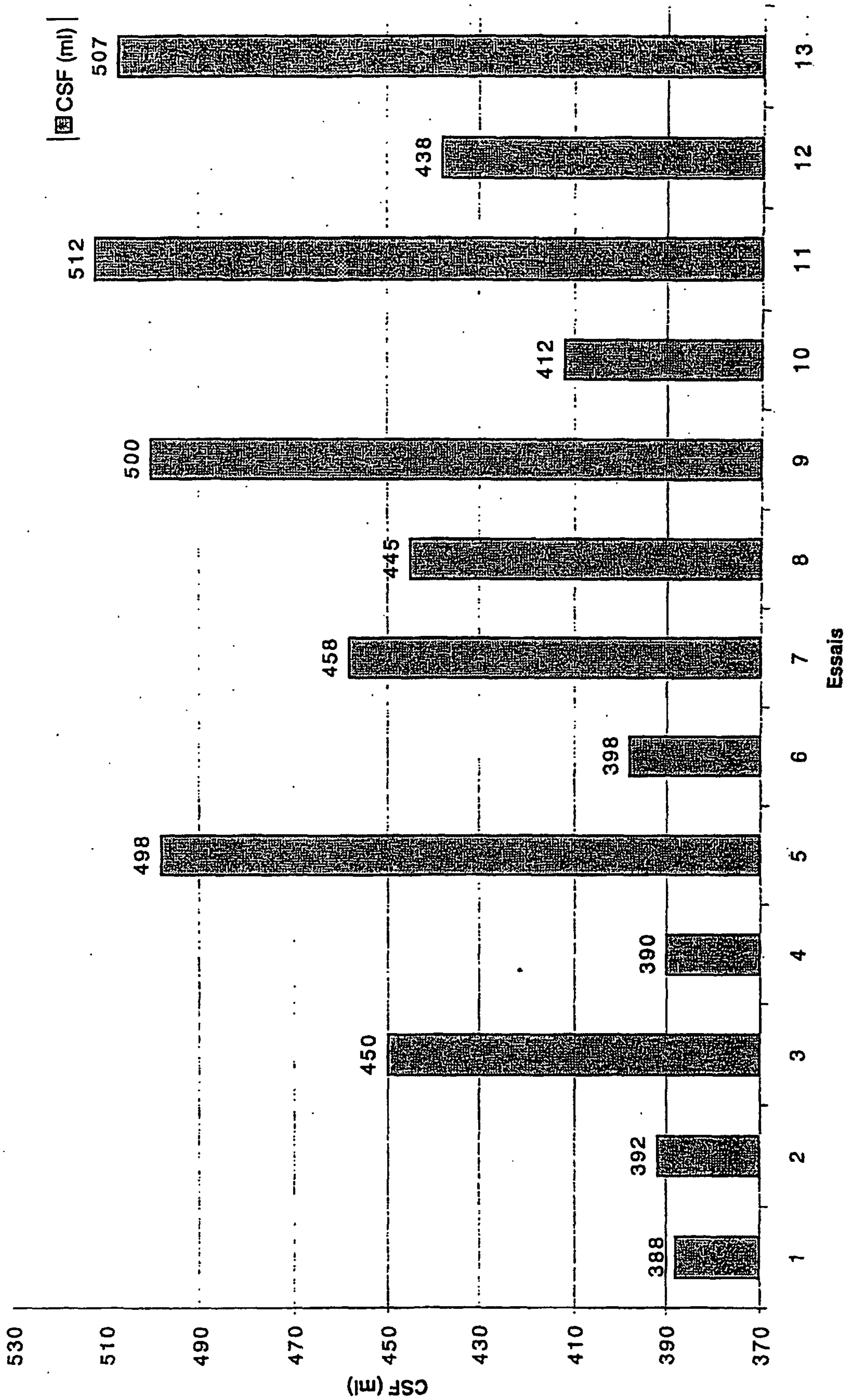

**Figure 2**

**Variation du CSF = (polymère)**

**Exemple 2**